# EUROPEAN PATENT SPECIFICATION

(11) **EP 1 260 141 B1**
(45) Date of publication and mention of the grant of the patent: **04.01.2012**
(21) Application number: 02078278.5
(22) Date of filing: 24.01.2000
(51) Int. Cl.: A22B 5/00

(54) **Vent Cutter**
Kloakenschneider
Dispositif de découpage d'orifice anal

(30) Priority: 12.02.1999 NL 1011287
(43) Date of publication of application: 27.11.2002
(62) Divisional of application: 00200265.7
(73) Proprietor: Humboldt B.V., 7131 PG Lichtenvoorde (NL)
(72) Inventor: Van Ochten, Sander Antonie, 6824 AD Arnhem (NL); Post, Gerard Jan, 7559 KG Hengelo (NL)
(74) Representative: Van den Heuvel, Henricus Theodorus

(56) References cited:
- EP-A- 0 492 735
- EP-A- 0 601 812
- WO-A-92/13458

## Description

The invention relates to a vent cutter for separating the outer end of the rectum and a carcass, comprising a jacket-like knife and engaging means for engaging an anus by insertion of a central core into the anus, which engaging means are after drilling out at least partly enveloped by the jacket-like knife.

During the slaughter of animals, such as pigs in particular, the carcasses of killed animals are suspended in industrial scale processing from a conveyor in order to be carried along a number of processing stations. Examples of such processes are: cleaving of the pubic bone, opening of the belly, detaching of the outer end of the rectum (also referred to as vent cutting), severing of the pizzle, removal of guts and so on. It is of great importance that operations on the carcass have the least possible adverse effect on the quality of the meat. It is thus important to minimize the contact between the contents of the intestines, and particularly of the rectum, and the meat. Because detaching of the outer end of the rectum (the outer end of the rectum) takes place at a position different from the removal of the guts from the carcass, it is desirable to take measures to prevent the content of the severed bung coming into contact with the carcass. In addition, the outer end of a severed bung must also be prevented from coming into contact with the carcass, since this is also contaminated on the outside by the severing. Existing measures provide for closing of the anus by for instance arranging a plug of fat therein. Devices also exist with which a detached bung can be enclosed. In further processing of the outer end of the rectum the enclosure must then be removed. The hygiene of the existing methods and devices is limited.

The international patent application WO 92/13458 describes a method and device for mechanized cutting out and removal of the anus of a slaughtered animal, whereby the rectum is cut free by means of a rotating tubular knife being moved into the animal from the back and substantially coaxially with the centre line of the rectum while being guided by means of a pin inserted in the rectum. The rectum cut free is retained by the knife and is pulled out of the animal in a substantially horizontal direction towards the ventral side of the animal. This method and device are relatively complex because drilling out of the outer end of the rectum has to take place over the carcass and the device must then be moved between the legs of the carcass to the ventral side. A mirror is arranged to position the device in the correct manner for drilling out the outer end of the rectum. The slaughterer has to position the device using visual information obtained with the mirror. This work is ergonomically hazardous and, due to the complexity, absolutely impossible to automate. An additional drawback of this method and device is that it obstructs access to the abdominal cavity.

The present invention has for its object to provide an improved method and device for detaching the outer end of the rectum of a carcass with which a carcass can be processed in automated, hygienic manner.

The invention provides for this purpose a vent cutter according claim 1. Such a vent cutter can be fitted relatively simply into existing devices for detaching the anus of a carcass. The head is enclosed in form-fitting manner without excessive application of force thereon. This preferred embodiment combines a solid coupling between anus and vent cutter with little danger of damage to the anus, enabling it due to the solid grip from the vent cutter on the drilled out anus or vent to extract the drilled out anus to be moved in any direction required, e.g. in line with the anus away from the carcass. The advantages of the improved vent cutter improve the flexibility of the further processing of the vent in a sealed situation; this enhances the hygiene and the efficiency of the process after cutting the anus.

In order to continue the engagement after engaging of the anus by the vent cutter, the vent cutter is preferably also provided with fixation means for fixing the central core in a desired position relative to the jacket-like knife. In order to release an engaged anus from the vent cutter the fixation between jacket and core must first of all be released such that the jacket and core can be mutually displaced to release the form-fitting enclosure of the head. So as to further simplify detaching of the anus the vent cutter is preferably also provided with blowing means for generating a gas flow between the core and an engaged anus.

The present invention will be further elucidated with reference to the non-limitative embodiments in the following figures. Herein:
figure 1 shows a schematic view of successive processes on a carcass,
figure 2A shows a cross-section through a combined cutting and pull-out tool as according to the invention in a cutting situation, and
figure 2B shows a cross-section through a combined cutting and pull-out tool of figure 1A in a pulling-out position.

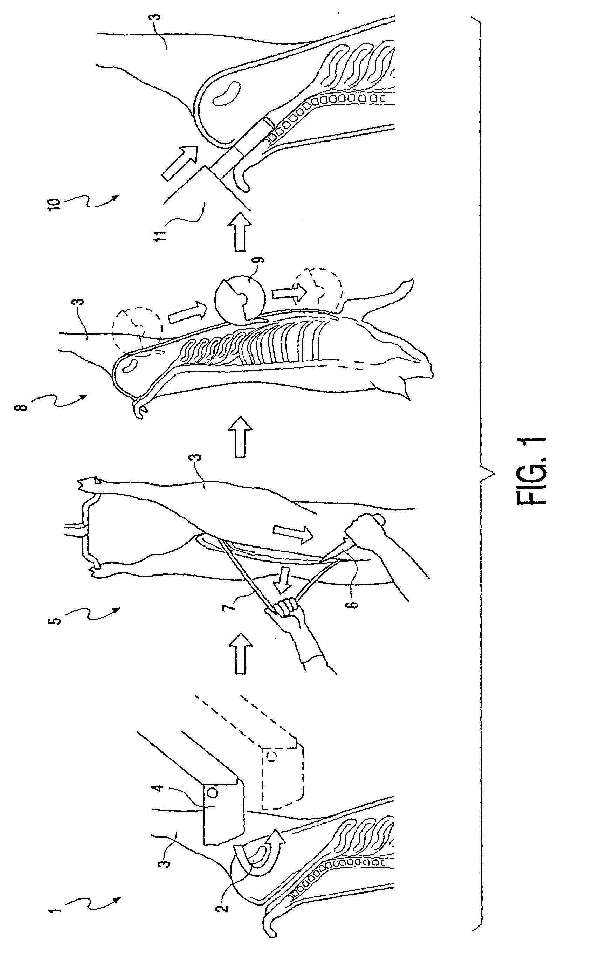

Figure 1 shows a first processing 1 wherein the pubic bone 2 of a suspended carcass 3 is cleaved by means of a knife 4. The ham is herein also divided into two symmetrical parts. An additional advantage of performing this operation first of all is that removal of the male organ is simplified and opening of the belly is thereby simplified. After performing this first process 1 a second processing 5 is carried out wherein a male organ 7 is removed manually using a knife 6. During performing of this second process 5 the carcass 3 can also be visually inspected and automatic operations in the vicinity can also be monitored. During a third processing 8 the belly of carcass 3 is opened using a knife 9. A subsequent fourth processing 10 is shown schematically here. The outer end of the rectum of carcass 3 is detached by means of a vent cutter 11.

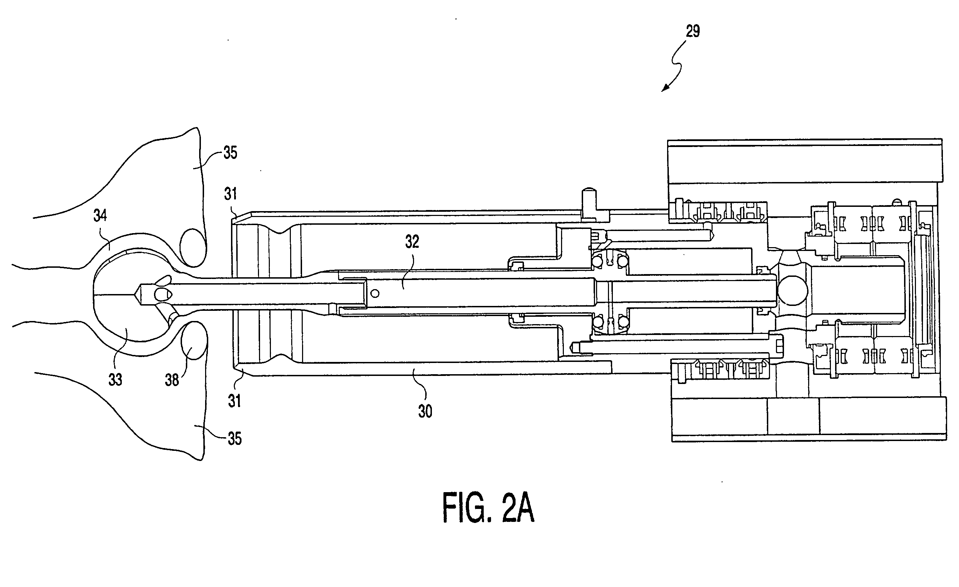

Figure 2A shows in cross-section a combined cutting and pull-out tool 29 with a jacket 30 which is provided on the side to be directed to a carcass with a cutting edge 31. Located axially in jacket 30 is a core or mandrel 32 which is provided on the side to be directed to a carcass with a thickened, here substantially spherical outer end 33. Mandrel 32 is displaceable in axial direction relative to jacket 30. In the shown situation the mandrel 32 protrudes so far out of jacket 30 that the thickened outer end 33 lies wholly outside jacket 30. In this situation the thickened outer end 33 can be inserted into an anus 34 (with head 38) before cutting edge 31 comes into contact with tissue 35 located around anus 34.

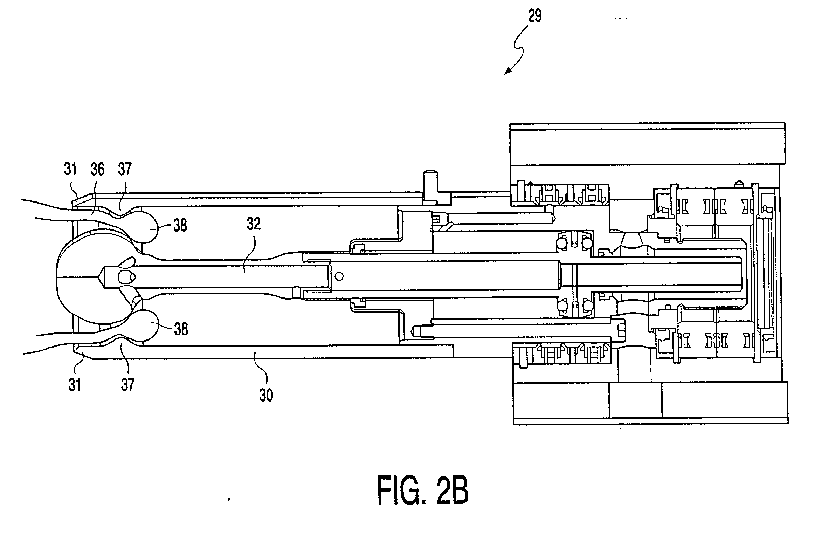

Figure 2B shows cutting and pull-out tool 29 of figure 6A after performing of a cutting operation by the cutting edge 31 of jacket 30. Due to the cutting operation the outer end of the rectum 36 is detached from the surrounding tissue. After performing of the cutting operation the mandrel 32 is retracted some distance into jacket 30. As a result the thickened outer end 33 comes into the vicinity of a part of the inner side of jacket 30 narrowed by an inner ring 37. The free space between the inner ring 37 and the thickened outer end 33 can hereby be decreased such that head 38 can no longer pass through between them. When the assembly of jacket 30 and mandrel 32 is now moved integrally away from the carcass, the outer end of the rectum 36 will be pulled along therewith; it can in any case not come loose from the assembly. A relatively large pulling force can thus be exerted on bung 36 so that it can be pulled a greater distance out of the carcass and so that membrane connections between rectum and carcass can be broken. For release of head 38 with bung 36 from the assembly of jacket 30 and mandrel 32, the mandrel 32 has to be displaced some distance (to a position partly outside jacket 30).

Although the invention is elucidated with reference to only a few embodiments, it will be apparent to all that the invention is in no way limited to the described and shown embodiments. On the contrary, many variations are still possible for a skilled person within the scope of the invention.

## Claims

1. Vent cutter (11,29) for separating the outer end of the rectum (36) and a carcass (3), comprising a jacket-like knife (30) and engaging means for engaging an anus (34) by insertion of a central core (32) into the anus (34), which engaging means after drilling out the anus (34,36) are at least partly enveloped by the jacket-like knife (30), **characterised in that**,
the core (32) has a thickened outer end (33) and the core is displaceable in axial direction relative to the jacket-like knife (30), such that prior to drilling the core (32) can be inserted into the anus (34), and after drilling out the core (32) is at least partly enveloped by the jacket-like knife (30), whereby the anus (34,36) is enclosed between the jacket-like knife (30) and the outer end (33) of the core (32).

2. Vent cutter (11,29) as claimed in claim 1, **characterised in that**, the vent cutter (11,29) is also provided with fixation means for fixing the central core (32) in a desired position relative to the jacket-like knife (30).

3. Vent cutter (11,29) as claimed claim 1 or 2, **characterised in that,** the vent cutter (11,29) is also provided with blowing means for generating a gas flow between the core (32) and an engaged anus (34,36).

## Patentansprüche

1. Kloakenschneider (11,29) zum Abtrennen des äußeren Endes des Mastdarms (36) von einem Schlachtkörper (3), welcher Kloakenschneider ein zylinderförmiges Messer (30) und Greifmittel umfasst zum Greifen eines Anus (34) durch Einführen eines zentralen Kerns (32) in den Anus (34), welche Greifmittel nach dem Ausbohren des Anus (34,36) zumindest teilweise von dem zylinderförmigen Messer (30) umschlossen werden, **dadurch gekennzeichnet, dass**
der Kern (32) ein verdicktes äußeres Ende (33) besitzt und der Kern in axialer Richtung relativ zu dem zylinderförmigen Messer (30) verschiebbar ist, derart dass der Kern (32) vor dem Bohren in den Anus (34) eingeführt werden kann, und der Kern (32) nach dem Ausbohren zumindest teilweise von dem zylinderförmigen Messer (30) eingeschlossen wird, wobei der Anus (34,36) zwischen dem zylinderförmigen Messer (30) und dem äußeren Ende (33) des Kerns (32) eingeschlossen wird.

2. Kloakenschneider (11,29) nach Anspruch 1, **dadurch gekennzeichnet, dass** der Kloakenschneider (11,29) auch mit Befestigungsmitteln zur Befestigung des zentralen Kerns (32) in einer gewünschten Position relativ zum zylinderförmigen Messer (30) versehen ist.

3. Kloakenschneider (11,29) nach Anspruch 1 oder 2, **dadurch gekennzeichnet, dass** der Kloakenschneider (11,29) auch mit einem Gebläse zur Erzeugung eines Gasstroms zwischen dem Kern (32) und einem gegriffenen Anus (34,36) versehen ist.

## Revendications

1. Dispositif de découpe d'orifice anal (11, 29) pour séparer l'extrémité extérieure du rectum (36) et une carcasse (3), comprenant un couteau enveloppant (30) et des moyens de saisie pour saisir un anus (34) par insertion d'un mandrin central (32) dans l'anus (34), lesquels moyens de saisie, après découpe de l'anus (34, 36) par forage, sont enveloppés au moins partiellement par le couteau enveloppant (30), **caractérisé en ce que**
le mandrin (32) a une extrémité externe épaissie (33) et **en ce que** le mandrin est déplaçable dans le sens axial par rapport au couteau enveloppant (30) de telle sorte qu'avant le forage, le mandrin (32) peut être inséré dans l'anus (34) et qu'après la découpe par forage, le mandrin (32) est enveloppé au moins partiellement par le couteau enveloppant (30), l'anus (34, 36) étant de ce fait enserré entre le couteau enveloppant (30) et l'extrémité extérieure (33) du mandrin (32).

2. Dispositif de découpe d'orifice anal (11, 29) selon la revendication 1, **caractérisé en ce que** le dispositif de découpe d'orifice anal (11, 29) est aussi pourvu de moyens de fixation pour fixer le mandrin central (32) dans une position voulue par rapport au couteau enveloppant (30).

3. Dispositif de découpe d'orifice anal (11, 29) selon la revendication 1 ou 2, **caractérisé en ce que** le dispositif de découpe d'orifice anal (11, 29) est aussi pourvu de moyens de soufflage pour produire un écoulement de gaz entre le mandrin (32) et l'anus saisi (34, 36).
